(19) **Europäisches Patentamt**
**European Patent Office**
**Office européen des brevets**

(11) **EP 2 784 197 B1**

(12) **EUROPEAN PATENT SPECIFICATION**

(45) Date of publication and mention
of the grant of the patent:
**10.08.2016 Bulletin 2016/32**

(51) Int Cl.:
*D03D 1/00* (2006.01)      *B29B 15/08* (2006.01)
*D03D 15/00* (2006.01)      *D03D 15/12* (2006.01)
*B29B 11/16* (2006.01)      *D03D 27/02* (2006.01)
*D06M 15/263* (2006.01)      *D06M 101/40* (2006.01)

(21) Application number: **12852327.1**

(22) Date of filing: **01.10.2012**

(86) International application number:
**PCT/JP2012/075368**

(87) International publication number:
**WO 2013/077087 (30.05.2013 Gazette 2013/22)**

(54) **CARBON FIBER BASE MATERIAL AND CARBON FIBER REINFORCED PLASTIC**

KOHLENSTOFFFASERGRUNDMATERIAL UND KOHLEFASERVERSTÄRKTER KUNSTSTOFF

MATÉRIAU DE BASE EN FIBRE DE CARBONE ET PLASTIQUE RENFORCÉ PAR DES FIBRES DE CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.11.2011 JP 2011254261**

(43) Date of publication of application:
**01.10.2014 Bulletin 2014/40**

(73) Proprietors:
• **Tsudakoma Corp.**
**Kanazawa-shi**
**Ishikawa 921-8650 (JP)**
• **Kyoto Institute of Technology**
**Sakyo-ku**
**Kyoto-shi, Kyoto 606-8585 (JP)**

(72) Inventors:
• **HIRAI, Jun**
**Kanazawa-shi**
**Ishikawa 921-8650 (JP)**
• **TAKASHIMA, Makoto**
**Kanazawa-shi**
**Ishikawa 921-8650 (JP)**
• **KUCHIDA, Norio**
**Kanazawa-shi**
**Ishikawa 921-8650 (JP)**
• **NAKAI, Asami**
**Kyoto-shi**
**Kyoto 606-8585 (JP)**
• **HAMADA, Hiroyuki**
**Kyoto-shi**
**Kyoto 606-8585 (JP)**

(74) Representative: **Eisenführ Speiser**
**Patentanwälte Rechtsanwälte PartGmbB**
**Postfach 31 02 60**
**80102 München (DE)**

(56) References cited:
**EP-A1- 0 909 845          WO-A1-2006/090643**
**DE-A1- 1 906 678          JP-A- 2007 039 843**
**JP-A- 2010 149 353          JP-A- 2012 106 461**
**US-A1- 2004 170 799          US-A1- 2005 042 412**

• **JUN HIRAI ET AL.: 'Sokan no Keba ga Fukugo Zairyo no Rikigakuteki Tokusei ni Oyobosu Eikyo' THE TEXTILE MACHINERY SOCIETY OF JAPAN NENJI TAIKAI KENKYU HAPPYO RONBUNSHU KOEN YOSHISHU vol. 63, May 2010, pages 44 - 45, XP008173800**
• **JUN HIRAI ET AL.: 'Ihosei o Yusuru Sokan no Keba ga Fukugo Zairyo no Rikigakuteki Tokusei ni Oyobosu Eikyo' THE TEXTILE MACHINERY SOCIETY OF JAPAN NENJI TAIKAI KENKYU HAPPYO RONBUNSHU KOEN YOSHISHU vol. 65, 02 June 2012, pages 122 - 123, XP008173799**

**Description**

Technical Field

The present invention relates to a carbon-fiber preform for a carbon-fiber-reinforced plastic (hereinafter, in the present specification, referred to as a "CFRP") including mutually intersecting warp and weft each of which including a carbon-fiber multifilament yarn and to a CFRP produced by layering a plurality of such carbon-fiber preforms.

In the present application, the term "CFRP" refers to CFRP products in general that are produced by using a thermosetting resin or a thermoplastic resin as a matrix resin and layering carbon-fiber preforms by autoclave molding, hand layup molding, RTM molding, hot-press molding, or the like. In the present application, the term "carbon-fiber preform" refers to a fabric that is used to produce such CFRP products in general.

Background Art

PTL 1 describes a known technology related to a CFRP that is produced by layering two or more prepregs each including a matrix resin and a carbon-fiber perform fabric.

Moreover, PTL 1 describes a technology in which a flat and substantially untwisted reinforcing-fiber multi-filament yarn is used in order to improve mechanical properties.

Citation List

Patent Literature

PTL 1: Japanese Unexamined Patent Application Publication No. 7-243147
PTL 2: US Patent Application Publication No. 2005/0042412

Summary of Invention

Technical Problem

In the technology described in PTL 1, the reinforcing-fiber multi-filament yarn is used only for the purpose of improving mechanical properties. However, the lifetime of a CFRP product depends on the delamination strength between layers of carbon-fiber preforms of the CFRP (hereinafter referred to as the "delamination strength"). Therefore, in order to prolong the lifetime of a CFRP product, it is necessary to improve the delamination strength.

US patent application 2005/0042412 discloses composite elastomeric yarns and fabrics suitable for use in furniture/seating fabrics. A composite yarns may comprise a core, a sheath, and fibers disposed about and mechanically anchored into the sheath. The core may comprise a plurality of elastomeric filaments. The formation of a fabric from composite yarns and conventional fibers may be accomplished by any of the methods well known in the art including weaving, knitting, braiding, felting and other such methods.

However, there are no existing technologies for improving the delamination strength of a CFRP in order to prolong the lifetime of a CFRP product made from carbon-fiber preforms.

An object of the present invention, which has been made in consideration of the above circumstances, is to provide a carbon-fiber preform that can improve the delamination strength of a CFRP and to provide the CFRP.

A method of evaluating the delamination strength of a CFRP is specified in JIS as "Testing method for apparent interlaminar shear strength of carbon fiber reinforced plastics by three point loading method". The term "interlaminar shear strength" refers to strength against shearing in a direction in which layers of a CFRP laminate are displaced parallelly. Improving the delamination strength of a CFRP, which is an object of the present invention, is the same as improving the interlaminar shear strength of the CFRP.

Solution to Problem

A carbon-fiber preform according to the present invention, which is a carbon-fiber preform for a CFRP, is formed from mutually intersecting warp and weft each of which including a carbon-fiber multifilament yarn. At least one of layer surfaces has fluff formed by cutting some of filaments of the carbon-fiber multifilament yarn, and a total fluff length of fluff formed on the warp and a total fluff length of fluff formed on the weft are not equal.

The term "layer surface" refers to a surface that faces another carbon-fiber preform when the carbon-fiber preform is layered to produce a CFRP. Therefore, for each of carbon-fiber preforms that are used as intermediate layers, which are not at the uppermost or lowermost surfaces of a CFRP, two surfaces, i.e., the front surface and the back surface of the carbon-fiber preform are layer surfaces. In other words, each of carbon-fiber preforms used as intermediate layers of a CFRP has two layer surfaces. On the other hand, for each of two carbon-fiber preforms at the outermost surfaces of the CFRP, only one surface of the carbon-fiber preform facing another carbon-fiber preform is a layer surface. Therefore, each of such carbon-fiber preforms has only one layer surface. Note that, regarding "at least one of layer surfaces", for each of two carbon-fiber preforms at the outermost surfaces, which has only one layer surface, the layer surface is the at least one of layer surfaces.

The term "total fluff length" refers to the total length of fluff (the sum of the lengths of pieces of fluff) per unit area (for example, $1 \text{ cm}^2$), which is a value obtained by multiplying the fluff density (the number of pieces of fluff per unit area) by the average fluff length (the average of the lengths of all pieces of fluff). To be specific, it is calculated as follows: "Total fluff length = Fluff density x Average fluff length".

Moreover, in the present invention, the term "intersect" refers not only to a case where the warp and the weft intersect perpendicularly (at 90°) but also to a case where they intersect at an angle that is not 90°. When the warp is used as a reference and the weft forms an angle with respect to a direction perpendicular to the warp, the weft is called the weft for convenience. However, such a weft is not a pure weft but has a component in the warp direction. This is because, when the weft forms a large angle with respect a direction perpendicular to the warp, the weft is closer to being a warp than a weft. Therefore, when the weft forms an angle with respect to a direction perpendicular to the warp, fluff formed on the weft can be divided into fluff (component) in the weft direction and fluff (component) in the warp direction. For example, when fluff is formed on the weft that forms an angle of 30° with respect to a direction perpendicular to the warp, about 36% of the entire fluff on the weft is fluff in the warp direction.

For a general fiber product, if fluff was generated on a yarn of the fiber product, the fluff would negatively influence the yield and the quality of the fiber product. Therefore, in existing technologies, various techniques have been used in order to suppress generation of fluff when producing a fiber product. In other words, in existing technologies, it is a common sense to suppress generation of fluff on a yarn of a fiber product. In contrast, with the present invention, the fluff is intentionally formed so as to improve the delamination strength of a CFRP produced by using carbon-fiber preforms.

If some filaments of a carbon-fiber multifilament yarn of a carbon-fiber preform were cut in order to improve the delamination strength, the delamination strength of the CFRP would improve. On the other hand, the strength of the carbon-fiber preform itself would decrease because the strength of the carbon-fiber multifilament yarn would decrease. Accordingly, the strength of a CFRP obtained by layering such carbon-fiber preforms would decrease.

The inventors of the present invention focused on a fact that there are some cases where strength in a specific direction is particularly required for a final product in which the CFRP is to be used. Therefore, in order to improve the delamination strength of the CFRP as described above, fluff is formed on a carbon-fiber preform used for producing a CFRP, while making fluff formed on the warp and fluff formed on the weft of the carbon fiber preform be not equal to each other so as to make the strength in one of directions of the warp and the weft of the carbon-fiber perform become higher than that in the other direction.

In the carbon-fiber preform according to the present invention, regarding the degree to which the total fluff lengths are not equal, it is preferable that the total fluff length with respect to a direction of one of the warp and the weft be less than 20% of a sum of the total fluff lengths of the warp and the weft. This is in order to prevent, while cutting filaments to form the fluff, the strength in the direction of one of the warp and the weft from becoming lower than that of a carbon-fiber perform that does not have fluff.

As described above, the present invention includes consideration of a case where the warp and the weft intersect at an angle that is not 90°. In this case, when the direction of one of the warp and the weft is considered as a reference, fluff formed on the other of the warp and the weft is divided into a component in the direction of the one of the warp and the weft and a component in a direction perpendicular to the direction in accordance with the angle. Therefore, for example, when the warp direction is considered as a reference and fluff is obtained by cutting filaments of only the weft, the angle of the weft with respect to a direction perpendicular to the warp direction is permitted to be an angle at which the component of the fluff of the weft in the warp direction is less than 20%. To be specific, the angle is in the range of about $\pm$ 33.7° with respect to the direction perpendicular (90°) to the warp direction.

As described above, in the present invention, it is not necessary that the condition "less than 20%" is satisfied by making the total fluff length of fluff formed on one of the warp and the weft be less than 20% of the entire fluff length. The condition may be satisfied by also considering a component in the direction of the other of the warp and the weft. For example, in the case where the weft forms an angle of 30° with respect to the direction perpendicular to the warp, fluff formed on the weft has a component of about 36% in the warp direction. In this case, if fluff is not formed on the warp (fluff of the warp in the warp direction is 0%), the ratio of fluff in the warp direction to fluff on the entire preform is about 18%, which satisfies the condition "less than 20%".

A carbon-fiber-reinforced plastic according to the present invention is a carbon-fiber-reinforced plastic produced by layering a plurality of carbon-fiber preforms. At least one of the plurality of carbon-fiber preforms is the carbon-fiber preform according to the present invention. The carbon-fiber perform on which fluff is formed is layered so that one of the warp and the weft having a smaller total fluff length forms an angle of 45° or less with respect to a direction in which strength is required for the carbon-fiber-reinforced plastic.

The phrase "a direction in which strength is required for the carbon-fiber-reinforced plastic" refers to a direction in which flexural strength is required for the carbon-fiber-reinforced plastic itself in relation to a final product in which the carbon-fiber-reinforced plastic is to be used. To be specific, as described above, there are some cases where flexural strength in a specific direction is particularly required for a final product in which the carbon-fiber-reinforced plastic is to be used. When a direction in which flexural strength is required for the final product is set in the design, a direction in which flexural strength is required for each of carbon-fiber-reinforced plastics to be used in the final product is also set in accordance with the position of the carbon-fiber-reinforced plastic in the final product. Therefore, this direction is the "direction in which strength is required". Each of the carbon-fiber-reinforced plastics is formed by layering carbon-fiber preforms so as to satisfy a flexural strength required for the carbon-fiber-reinforced plastic with respect to the direction.

In the carbon-fiber-reinforced plastic according to the present invention, it is preferable that a sum of total fluff length of the carbon-fiber preform on which the fluff is formed with respect to the direction in which strength is required for the carbon-fiber-reinforced plastic be less than 20% of a sum of the total fluff lengths of the warp and the weft.

The phrase "total fluff length with respect to the direction in which strength is required" refers to a value obtained by converting the total fluff lengths of the warp and the weft into a total fluff length in the direction in which strength is required for the carbon-fiber-reinforced plastic, in a case where the warp and the weft of a carbon-fiber perform that have fluff form angles with respect to the direction in which strength is required for the carbon-fiber-reinforced plastic. This is calculated as follows.

In the case where a yarn of a carbon-fiber preform that has fluff forms an angle with respect to the direction in which strength is required for a carbon-fiber-reinforced plastic, a corresponding total fluff length is calculated by means of a component (ratio) in the direction in which strength is required for the carbon-fiber-reinforced plastic. For example, when a carbon-fiber preform in which only the weft has fluff is disposed so that the weft forms an angle of 45° with respect to the direction in which strength is required for the carbon-fiber-reinforced plastic, the total fluff length in the direction in which strength is required is calculated by using the following equation: "Total fluff length of weft with respect to the direction in which strength is required = Total fluff length of weft x sin45°/(sin45° + cos45°) = 50% of total fluff length of weft".

In the carbon-fiber-reinforced plastic according to the present invention, the total fluff length of one of the warp and the weft of the carbon-fiber preform on which the fluff is formed may be less than 20% of a sum of the total fluff lengths of the warp and the weft, and the carbon-fiber preform may be layered so that the one of the warp and the weft is oriented in the direction in which strength is required for the CFRP.

Advantageous Effects of Invention

In the carbon-fiber preform according to the present invention, at least one of the layer surfaces has fluff formed by cutting some of filaments of a carbon-fiber multifilament yarn. Therefore, the contact area over which the carbon-fiber preform contacts a matrix resin used for lamination is larger that of a carbon-fiber preform that does not have fluff on a layer surface. As a result, the delamination strength of a CFRP produced by using the carbon-fiber preform is improved.

In the carbon-fiber preform according to the present invention, in particular, the total fluff length of fluff formed on the warp and the total fluff length of fluff formed on the weft are not equal. Therefore, although the strength is decreased due to cutting, the ratio of decrease in the strength can be made to differ between the warp and the weft. Thus, by layering the carbon-fiber preforms in appropriate directions to form a CFRP, the strength in a direction in which strength is required for the CFRP can be improved as compared with carbon-fiber preforms in which the total fluff length of the warp is the same as the total fluff length of the weft. As a result, CFRP products can be easily designed.

In the carbon-fiber preform according to the present invention, by making the total fluff length in the direction of one of the warp and the weft be less than 20% of the total fluff lengths of the warp and the weft, the strength in the direction of the one of the warp and the weft can be made about the same as or higher than that of a carbon-fiber preform on which fluff is not formed. Therefore, by producing a CFRP by using such carbon-fiber preforms, it is possible to produce a CFRP having a desired strength in a direction in which strength is required while improving the delamination strength.

To be specific, regarding a carbon-fiber preform formed by weaving the weft into the warp, when some of filaments of the other of the warp and the weft are cut, the tension of the other of the warp and the weft is released and crimp stresses generated in crimp portions (bow-shaped curved portions) of the one of the warp and the weft are reduced, and therefore the strength of the one of the warp and the weft is improved. As a result, even when fluff is formed by cutting some of filaments of also the one of the warp and the weft, although the strength in the direction of the one of the warp and the weft is reduced due to cutting of the filaments, if the ratio of the fluff to the entire fluff on the layer surface is less than 20%, the strength of the one of the warp and the weft is improved due to reduction in the crimp stresses, and therefore it is possible to make the strength in the direction of the one of the warp and the weft be made about the same as or higher than that of a carbon-fiber preform that does not have fluff on the layer surface. By using such a carbon-fiber preform, it is possible to produce a CFRP having a desired flexural strength in the direction in which strength is required while improving the delamination strength.

In the carbon-fiber-reinforced plastic according to the present invention, at least one of the layer surfaces of at least one of the plurality of carbon-fiber preforms of the carbon-fiber-reinforced plastic has fluff obtained by cutting some of filaments of a carbon-fiber multifilament yarn. Therefore, as compared with a carbon-fiber-reinforced plastic formed by layering only carbon-fiber preforms that do not have fluff on the layer surfaces, the delamination strength at the layer surfaces is improved. Moreover, in the carbon-fiber-reinforced plastic according to the present invention, in particular, the total fluff length of the fluff formed on the warp and the total fluff length of the fluff formed on the weft are not equal, and the carbon-fiber preforms are layered so that one of the warp and the weft having a smaller total fluff length forms an angle of 45° with respect to the direction in which strength is required for the carbon-fiber-reinforced plastic. Therefore, the total fluff length in the direction in which strength is required can be made smaller than that of a carbon-fiber-reinforced plastic in which the total fluff length of the warp is equal to the total fluff length of the weft. As a result, flexural strength in the direction in which strength is required for the carbon-fiber-reinforced plastic can be improved.

In the carbon-fiber-reinforced plastic according to the present invention, by making the sum of total fluff length of the carbon-fiber preform on which fluff is formed with respect to a direction in which strength is required for the carbon-fiber-reinforced plastic be less than 20% of the sum of the total fluff lengths of the warp and the weft, delamination strength at the layer surfaces can be improved as compared with a carbon-fiber-reinforced plastic formed by layering only carbon-fiber preforms that do not have fluff on the layer surfaces, while preventing reduction in the flexural strength with respect to the direction in which strength is required for the carbon-fiber-reinforced plastic.

In the carbon-fiber-reinforced plastic according to the present invention, by making the total fluff length of one of the warp and the weft of the carbon-fiber preform on which fluff is formed be less than 20% of the sum of the total fluff lengths of the warp and the weft and by layering the carbon-fiber preform so that the one of the warp and the weft is oriented in the direction in which strength is required for the carbon-fiber-reinforced plastic, delamination strength at the layer surfaces can be improved as compared with a carbon-fiber-reinforced plastic formed by layering only carbon-fiber preforms that do not have fluff on the layer surfaces, while preventing reduction in the flexural strength with respect to the direction in which strength is required for a carbon-fiber-reinforced plastic.

Brief Description of Drawings

[Fig. 1] Fig. 1 is a graph showing the relationship between the total fluff length and the physical property ratio of a CFRP produced from carbon-fiber preforms having a warp/weft ratio of 0%, which is the result of a preliminary test.
[Fig. 2] Fig. 2 is a graph showing the relationship between the warp/weft ratio and the physical property ratio of CFRPs produced from carbon-fiber preforms having a total fluff length of 60 cm, which is the result of a main test.
[Fig. 3] Fig. 3 is a graph showing the relationship between the warp/weft ratio and the physical property ratio of CFRPs produced from carbon-fiber preforms having a total fluff length of 90 cm, which is the result of the main test.
[Fig. 4] Fig. 4 is a graph showing the relationship between the warp/weft ratio and the physical property ratio of CFRPs produced from carbon-fiber preforms having a total fluff length of 180 cm, which is the result of the main test.
[Fig. 5] Fig. 5 is a partial plan view of a carbon-fiber preform according to an embodiment of the present invention.
[Fig. 6] Fig. 6 is a cross-sectional view taken along line A-A of Fig. 5.
[Fig. 7] Fig. 7 is a cross-sectional view taken along line B-B of Fig. 5.

Description of Embodiments

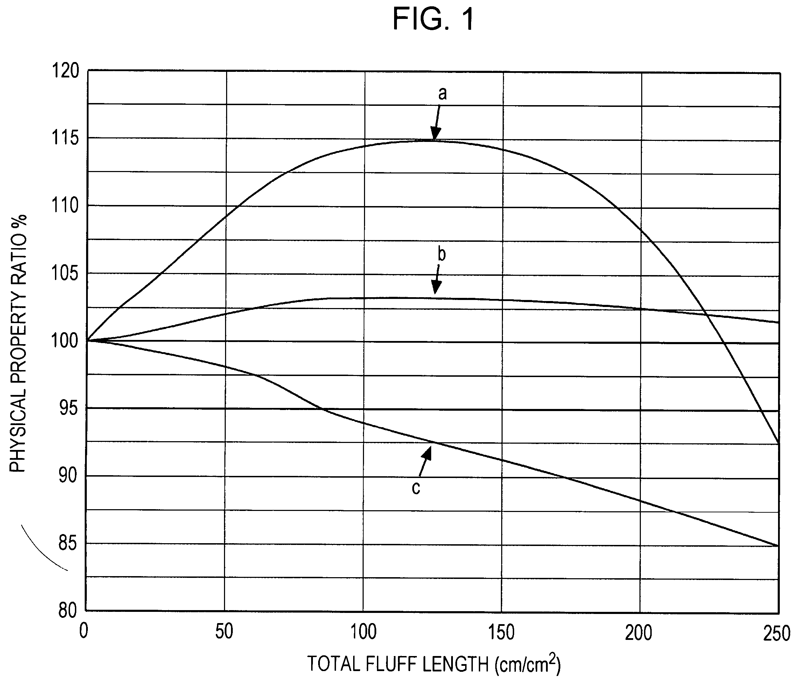

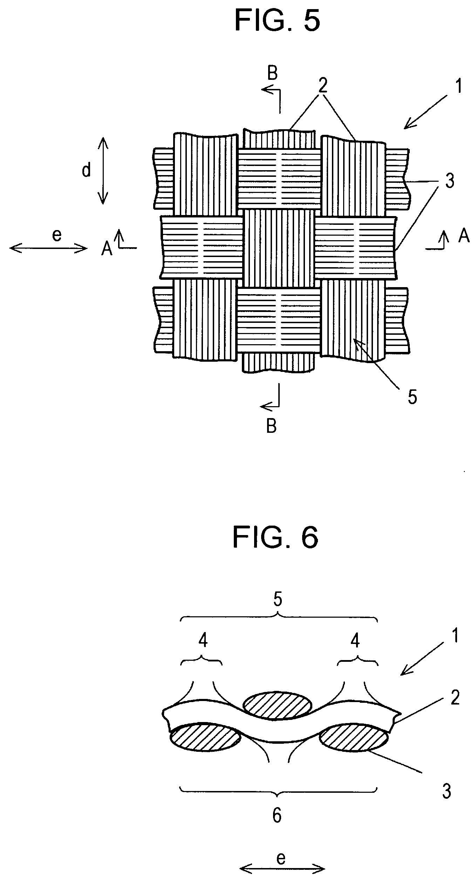

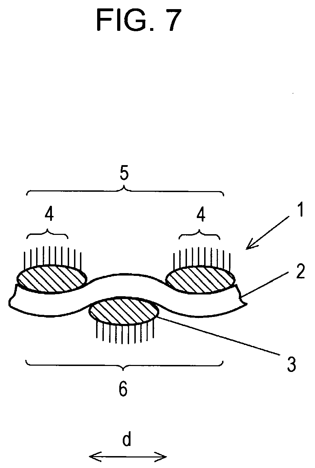

Hereinafter, an embodiment of the present invention will be described with reference to Figs. 1 to 7. Figs. 5 to 7 illustrate a carbon-fiber preform to which the present invention is applied and a carbon-fiber preform used for a fiber reinforced plastic (CFRP) according to the present invention. Fig. 5 is a partial enlarged plan view of the carbon-fiber preform according to the embodiment. Figs. 6 and 7 are respectively cross-sectional views taken along line A-A and line B-B of Fig. 5. A carbon-fiber preform 1 according to the present embodiment is a plain weave fabric in which only carbon-fiber multifilament yarns are used as warp 2 and weft 3. Therefore, the present embodiment shows an example of the carbon-fiber preform 1 in which the warp 2 and the weft 3 intersect (perpendicularly) at an angle of 90°.

In the CFRP according to the present embodiment, each of the layer surfaces of the carbon-fiber preforms 1, which are layered onto each other, has fluff. The fluff is formed by cutting some of filaments of a carbon-fiber multifilament yarn of at least the weft 3, which is one of the warp 2 and the weft 3. The carbon-fiber preform 1 illustrated in the figures is used as one of intermediate layers, which are not located at the outermost surfaces (the uppermost or the lowermost surfaces) of the CFRP. In the case of the carbon-fiber preform 1, which is one of intermediate layers, both surfaces thereof, that is, two surfaces 5 and 6 shown in the figures are layer surfaces. Although it is not shown in the figures, regarding two carbon-fiber preforms 1 that are located on the outermost surfaces of the CFRP, only one surface of the carbon-fiber preform 1 facing another carbon-fiber preform 1 is the layer surface.

In the CFRP according to the present embodiment, the carbon-fiber preforms 1 are layered so that the directions of the yarns are aligned with each other. In the present embodiment, the cross-sectional shapes of the warp 2 and the weft 3 of the carbon-fiber preform 1 are flat shapes compressed in the vertical direction, which are illustrated in Figs. 6 and 7. Fluff 4 is formed by cutting some of filaments of yarns from the front side of each of the surfaces 5 and 6, which are layer surfaces, and by raising the cut filaments by using a well-known method.

Moreover, in the CFRP according to the present embodiment, in order to increase the delamination strength of the carbon-fiber preforms 1 of the CFRP, regarding the fluff formed on the layer surfaces, the total fluff length of fluff formed on the warp 2 is made less than 20% of the sum of the total fluff lengths of fluff formed on the warp 2 and the weft 3. By doing so, the strength of each of the carbon-fiber preforms 1 in the direction of the warp 2 is prevented from becoming lower than that of a carbon-fiber preform that does not have fluff on the layer surface.

Thus, regarding the CFRP that is formed by layering such carbon-fiber preforms 1 so that the directions of the yarns are aligned with each other, in all of fluff formed on the layer surfaces of the carbon-fiber preforms 1 of the CFRP, the total fluff length of fluff formed on the warp 2 is less than 20% of the sum of the total fluff lengths of fluff formed on the warp 2 and the weft 3. Therefore, the flexural strength in the warp direction is not lower than that of a CFRP that is formed by layering only carbon-fiber preforms that do not have fluff on the layer surfaces. When producing a final product by using the CFRP according to the present embodiment, the CFRP is used so that a direction in which strength is required for the final product coincides with the warp direction of the carbon-fiber preforms 1 of the CFRP. Therefore, the direction of the warp 2 is the direction in which strength is required for the CFRP when it is used in the final product.

Hereinafter, the relationship between the flexural strength of the CFRP according to the present embodiment in the direction of the warp 2 and the state of fluff will be described on the basis of test results.

In the following description, the term "warp/weft ratio" refers to the aforementioned ratio of the total fluff length with respect to the direction of the warp 2 to the sum of the total fluff lengths of fluff formed on the warp and the weft. Therefore, in the case where the direction in which strength required as a CFRP coincides with the warp direction of the carbon-fiber preform and in which the warp and the weft of the carbon-fiber preform intersect perpendicular to each other as in the present embodiment, the "warp/weft ratio" can be calculated by using the following equation, where Y is the total fluff length on the layer surface with respect to the warp direction and X is the total fluff length on the layer surface with respect to the weft direction.

$$\texttt{Warp/weft ratio (\%) = Y ÷ (X + Y)×100}$$

For example, when fluff is formed only on the weft 3 and is not formed on the warp 2, the total fluff length of the warp 2 per unit area (such as 1 cm$^2$) of the layer surface is Y = 0 cm, and the ratio of this value to the total fluff length X (> 0 cm) of the weft 3 is 0:100. Therefore, the warp/weft ratio is 0%.

In the tests described below, which were performed on CFRPs, the relationship between the total fluff length and the physical property ratio of each CFRP and the relationship between the warp/weft ratio and the physical property ratio of each CFRP were obtained. Regarding the relationship between the total fluff length and the physical property ratio of a CFRP, in the present embodiment, the total fluff lengths on the layer surfaces of the carbon-fiber preforms 1 of the CFRP are substantially the same. Therefore, the evaluation of the physical property ratio with respect to the total fluff length of the CFRP is proportional to the evaluation of the physical property ratio with respect to the total fluff length of a single carbon-fiber preform 1. As a result, the evaluation of the CFRP can be used as a substitute for the evaluation of a single carbon-fiber preform 1.

Also regarding the relationship between the warp/weft ratio and the physical property ratio of a CFRP, in the present embodiment, the CFRP is formed by layering the carbon-fiber preforms 1 so that the directions of the yarns are aligned with each other and the warp/weft ratios on the layer surfaces of the carbon-fiber preforms 1 are made substantially the same. Thus, the evaluation of the physical property ratio with respect to the warp/weft ratio of the CFRP is proportional to the evaluation of the physical property ratio with respect to the warp/weft ratio of a single carbon-fiber preform 1. As a result, the evaluation of the CFRP can be used as a substitute for the evaluation of a single carbon-fiber preform 1.

[Preliminary Test]

Regarding a carbon-fiber preform, if the warp/weft ratio is changed while keeping the total fluff length constant, it is expected that the properties of a CFRP produced by using the carbon-fiber preform will change. Therefore, for a CFRP according to the present embodiment, it is necessary to evaluate at what level of the warp/weft ratio it is possible to obtain a desired flexural strength in a direction (warp direction) in which strength is required for the CFRP, which is produced by using the carbon-fiber preforms. Therefore, a main test was carried out on CFRPs having specific total fluff lengths to obtain the flexural strengths of the CFRPs at various warp/weft ratios. Before the main test, a preliminary test was carried out in order to support the evaluation to be obtained by the main test. The preliminary test was carried out to detect a trend in the change of the flexural strength of a CFRP when the total fluff length was changed while keeping the warp/weft ratio constant.

In the present embodiment, evaluations obtained in both of the preliminary test and the main test are not absolute evaluations of the flexural strengths of CFRPs (samples that have fluff) produced by using carbon-fiber preforms whose warp/weft ratio were changed but are relative evaluations in comparison with CFRPs (samples that do not have fluff) produced by using only carbon-fiber preforms that do not have fluff on the layer surfaces. Therefore, on the basis of the results of flexural strength tests carried out on the samples that do not have fluff and the samples that have fluff having various warp/weft ratios, the flexural strength ratios are calculated by using the following equation, and the calculated flexural strength ratio is used for evaluation.

$$\text{Flexural strength ratio (\%)} = \text{Flexural strength of each}$$
$$\text{sample that has fluff} \div \text{Flexural strength of sample that}$$
$$\text{does not have fluff} \times 100$$

In the present embodiment, as reference data, the delamination strengths of the sample that has fluff and the sample that does not have fluff are compared with each other. A delamination strength ratio is also obtained for the comparison. The delamination strength ratio is calculated by using the following equation.

$$\text{Delamination strength ratio (\%)} = \text{Delamination strength}$$
$$\text{of each sample that has fluff} \div \text{Delamination strength of}$$
$$\text{sample that does not have fluff} \times 100$$

First, in the preliminary test, carbon-fiber preforms of three types shown in Table 1 below, which were 3K, 6K, and 12K cloths using carbon-fiber multifilament yarns having 3K, 6K, and 12K filaments, were prepared. For each of the carbon-fiber preforms of the three types, the fluff 4 was formed by cutting some of filaments of the weft 3 so as to have a warp/weft ratio of 0%.

[Table 1]

| 3K cloth | Average fluff length of carbon-fiber preform = 1.0 mm (Warp/weft density = 5 yarns/10 mm) |
|---|---|
| 6K cloth | Average fluff length of carbon-fiber preform = 1.25 mm (Warp/weft density = 4 yarns/10 mm) |
| 12K cloth | Average fluff length of carbon-fiber preform = 2.5 mm (Warp/weft density = 2 yarns/10 mm) |

Regarding a carbon-fiber product, the number of filaments may be represented by using a symbol "K", which means 1000. In other words, when a carbon fiber has 3000 filaments, a symbol "3K" is used, and a fabric formed by weaving 3K carbon fiber yarns may be represented as a "3K cloth". In the description of the present embodiment, 3K, 6K, and 12K cloths will be referred to as 3K, 16K, and 12K carbon-fiber preforms.

Fluff for the preliminary test was formed through the following steps.

(1) Some of filaments of a carbon-fiber multifilament yarn of the weft were cut while adjusting the cutting pitch and the cutting depth so that a desired total fluff length was obtained over all layer surfaces of a carbon-fiber preform. For example, by adjusting the cutting pitch and the cutting depth for each of carbon-fiber preforms, carbon-fiber preforms having different total fluff lengths in the range of 0 to 250 cm/cm$^2$ with a predetermined increment in length were produced. A "carbon-fiber preform having a total fluff length of 0 cm/cm$^2$" is a carbon-fiber preform that does not have fluff on the layer surface.

(2) Cut filaments on the layer surface of the carbon-fiber preform were raised.

(3) The number of pieces of fluff per unit area (1 cm$^2$) was visually counted by using a microscope, and the average fluff density (hereinafter referred to as the "fluff density") was obtained by calculating the average per unit area. In the case where the front and back surfaces of the carbon-fiber preform were layer surfaces, the fluff densities of the front surface and the back surface were independently calculated. In the test, carbon-fiber preforms having fluff densities of the same level on the front and back surfaces were used.

(4) The average of the lengths of pieces of fluff formed by raising cut filaments, that is, the average fluff length, was obtained by calculating the average of the lengths of all pieces of fluff that were counted. As a simple calculation method, 1/2 of the distance between adjacent warp yarns or the distance between adjacent weft yarns may be used as the average fluff length. To be specific, if the pitch of adjacent warp yarns is about 2 mm and weft yarns restrained by these warp yarns are cut at positions between these warp yarns, the average fluff length of the weft is about 1 mm.

(5) Then, the total fluff length, which is the total length of fluff present per unit area, was obtained by multiplying the fluff density by the average fluff length.

Through the steps described above, a large number of carbon-fiber preforms of 3K, 6K, and 12K types were produced so as to have total fluff lengths with a predetermined increment in length. In addition, carbon-fiber preforms of the three types that do not have fluff on the layer surfaces were prepared.

A desired number of each of 3K, 6K, and 12K carbon-fiber preforms that have fluff or that do not have fluff and that have the same total fluff length, which had been made through the aforementioned steps, were layered by using a hand layup method of applying a matrix resin, which was a vinyl ester resin (base resin Ripoxy R806B, curing agent Permek N, thermosetting resin), on the front and back surfaces of each of the carbon preforms. Then, the carbon-fiber preforms were let to stand for 24 hours after being layered, and then heated for 2 hours at 100°c so as to cure the matrix resin, and thereby CFRPs each having a layered structure were produced. Thus, CFRPs using each of 3K, 6K, and 12K carbon-fiber preforms having a warp/weft ratio of 0% and having different total fluff lengths with a predetermined increment in length were produced. Moreover, for the purpose of comparison for obtaining physical property ratios (flexural strength ratio and delamination strength ratio), CFRPs in which each of 3K, 6K, and 12K carbon-fiber preforms having no fluff on the layer surfaces were layered were produced.

Test specimens of the samples were made by cutting the CFRPs, produced as described above, by using a diamond cutter. The size of each test specimen for the interlaminar shear test (test for measuring the delamination strength) was set at 10 x 20 x 3 mm so that the distance between the supports could be made 15 mm, and the size of each test specimen for the flexural test (test for measuring the flexural strength) was set at 15 x 100 x 3 mm so that distance between supports could be made 80 mm. For each sample, two preliminary tests, i.e., the interlaminar shear test (JIS K 7078) and the flexural test (JIS K 7074), were carried out on each of the samples.

In the present embodiment, the strength of a CFRP is evaluated by carrying out the flexural test. This is because the flexural strength of a member used in a structure is an important factor in the design and evaluation of the structure, since such a member is generally used in a situation where a flexural load is applied. When a flexural load is applied to a member, both a tensile strain and a compressive strain are generated in the member, and whether the member fractures depends on a lower one of the tensile strength and the compressive strength.

The interlaminar shear test was carried out in a state in which the direction of a line connecting two supports is aligned with the warp direction of a sample. Note that, regarding the interlaminar shear test, there is substantially no difference between a test result obtained in a state in which the direction of a line connecting the two supports is aligned with the warp direction of sample and a test result obtained in a state in which the direction of the line is aligned with the weft direction of the sample. This is because delamination of a CFRP does not have directionality of fracture. Regarding the flexural test, a warp-direction flexural test in which the direction of a line connecting the two supports was aligned with the warp direction of a sample and a weft-direction flexural test in which the direction of the line connecting the two supports was aligned with the weft direction of the sample were carried out.

The graph of Fig. 1 shows the relationship between the total fluff length and each physical property ratio of a CFRP produced from carbon-fiber preforms having a warp/weft ratio of 0%, which is the result of the preliminary test. In the preliminary test, three test specimens of samples having the same total fluff length were made, and the interlaminar shear test and the flexural test were carried out on each of the three test specimens. Moreover, the average of the measurement data was calculated. The graph of Fig. 1 shows approximation curves based on the average. Note that, Fig. 1 shows only the results for 3K carbon-fiber preforms, because similar trends were obtained for all CFRPs in which 3K, 6K, and 12K carbon-fiber preforms were layered. In the graph of Fig. 1, an approximation curve of the delamination strength ratio is represented by a curve a, an approximation curve of the warp-direction flexural strength ratio is represented by a curve b, and an approximation curve of the weft-direction flexural strength ratio is represented by a curve c.

As can be seen from the graph of Fig. 1, the delamination strength ratio (curve a) shows an upwardly convex trend. To be specific, the delamination strength ratio shows a trend such that it increases with increasing total fluff length, reaches a peak value near a point where the total fluff length is 120 cm/cm$^2$, and then decreases. The reason for such a trend is estimated as follows.

First, as the total fluff length increases, the surface area of the carbon-fiber preform is increased and the bonding strength of the carbon-fiber preform and the matrix resin is increased. Therefore, the delamination strength shows an improving trend as the total fluff length increases from a state in which fluff is not formed. On the other hand, increasing the total fluff length leads to increasing the number of cut filaments. Therefore, as the total fluff length increases, the strength of carbon-fiber multifilament yarns of the carbon-fiber preform decreases. Accordingly, after the total fluff length has exceeded a certain length, the delamination strength ratio shows a decreasing trend. As a result, the delamination strength ratio is represented by an upwardly convex curve as described above. It can be seen from the graph of Fig. 1 that the range of total fluff length in which the delamination strength is improved by 10% or greater is the range of 60 cm/cm$^2$ < total fluff length < 180 cm/cm$^2$. In other words, in the range in which the total fluff length is less than 180 cm/cm$^2$ and greater than 60 cm/cm$^2$, the delamination strength of a CFRP produced from the carbon-fiber preforms is improved as compared with a CFRP made from carbon-fiber preforms that do not have fluff on the layer surfaces. The reason for using a value of 10% improvement in the delamination strength is as follows.

An object of the present invention is to improve the delamination strength a CFRP, which is required in view of the lifetime of the CFRP, as compared with a CFRP produced by layering carbon-fiber preforms that do not have fluff, without considerably increasing the cost. In order to keep the balance between an improvement in the delamination strength and an increase in the cost of forming fluff on the layer surfaces of carbon-fiber preforms, an improvement in the delamination strength by 10% or greater is set as a target.

Note that the warp/weft ratio does not influence the delamination strength. In other words, the delamination strength does not change as long as the total fluff length is the same. Therefore, although Fig. 1 shows only the results of the preliminary test in the case where the warp/weft ratio is 0%, the relationship between the total fluff length and the delamination strength is approximately the same as that shown by the curve a of the graph of Fig. 1 even when the warp/weft ratio is not 0%, as long as the total fluff length is the same.

As can be seen from the graph of Fig. 1, the weft-direction flexural strength ratio (curve c) shows a trend such that it decreases as the total fluff length increases. The reason for such a trend is considered as follows. The preliminary test was performed on a CFRP produced from carbon-fiber preforms having a warp/weft ratio of 0%. Therefore, an increase in the total fluff length leads to an increase in the amount of cut filaments. Accordingly, as the total fluff length increases, the strength of the weft (carbon fiber yarns) on the surface of preforms whose filaments are cut decreases.

In contrast, the warp-direction flexural strength ratio (curve b) shows a trend such that it improves slightly along an upwardly convex curve as the total fluff length increases. When the total fluff length is in the range of 90 to 150 cm/cm$^2$, the flexural strength ratio is improved by about 3% at the maximum. The reason for such a trend is estimated as follows.

Regarding a carbon-fiber preform formed by weaving the weft into the warp, it is considered that, when some of filaments of the weft are cut, the tension of the weft is released and crimp stresses generated in crimp portions (bow-shaped curved portions) of the warp are reduced, and therefore the strength of the warp is improved. It can be seen from the graph of Fig. 1 that the range of total fluff length in which the warp-direction flexural strength ratio is improved is the range of 0 cm/cm$^2$ < total fluff length < 250 cm/cm$^2$. In other words, when the total fluff length is less than 250 cm/cm$^2$, the warp-direction flexural strength of a CFRP produced from the carbon-fiber preforms is improved as compared with a CFRP made from carbon-fiber preforms that do not have fluff on the layer surfaces.

These results of the preliminary test show that, in the case where only the weft is cut in a plain-weave carbon-fiber perform, that is, in the case where the warp/weft ratio is 0%, when the total fluff length is in the range of less than 250 cm/cm$^2$, the warp-direction flexural strength is improved as compared with a CFRP produced by using only carbon-fiber preforms that do not have fluff on the layer surfaces. Therefore, it is estimated as follows. Regarding a carbon-fiber preform, in a case where the warp/weft ratio is not 0%, that is, in a case where some of filaments of the warp are cut so as to form fluff, the strength in the warp direction is reduced due to cutting of the filaments. However, even in this case, if the ratio of the fluff to the entire fluff on the layer surface is less than a specific ratio, the strength in the warp direction can be made about the same as or higher than that of a carbon-fiber preform that does not have fluff on the layer surface, because the strength of the warp is improved due to the reduction in the crimp stresses. By using such carbon-fiber preforms, it is estimated that it is possible to produce a CFRP having a desired flexural strength in a direction in which strength is required while improving the delamination strength.

Therefore, on the basis of the preliminary test results, the main test was performed to obtain a range of warp/weft ratio in which the warp-direction flexural strength ratio is not lower than 100% and preferably higher than 110%, that is, a range of warp/weft ratio in which the delamination strength ratio is not lower than 100% and the total fluff length is in the range of less than 180 cm/cm$^2$ and greater than 60 cm/cm$^2$.

[Main Test]

In the main test, for each of 3K, 6K, and 12K carbon-fiber preforms, the relationship between the warp/weft ratio and each physical property ratio at three total fluff lengths in the aforementioned range was evaluated. In the main test, fluff was formed, CFRPs were made, and samples were cut in the same way as in the preliminary test.

Moreover, in the main test, for each of 3K, 6K, and 12K carbon-fiber preforms having total fluff lengths of 60, 90, 180 cm/cm$^2$, a plurality of samples having different warp/weft ratios in the range of 0 to 50% were made. Then, the flexural test was carried out on each of these samples, and the relationship between the warp/weft ratio and the flexural strength ratio at each of the total fluff lengths was evaluated. Although it was assumed that the delamination strength ratio was greater than 110% at any of the three total fluff lengths, the interlaminar shear tests at different warp/weft ratios were also carried out for confirmation.

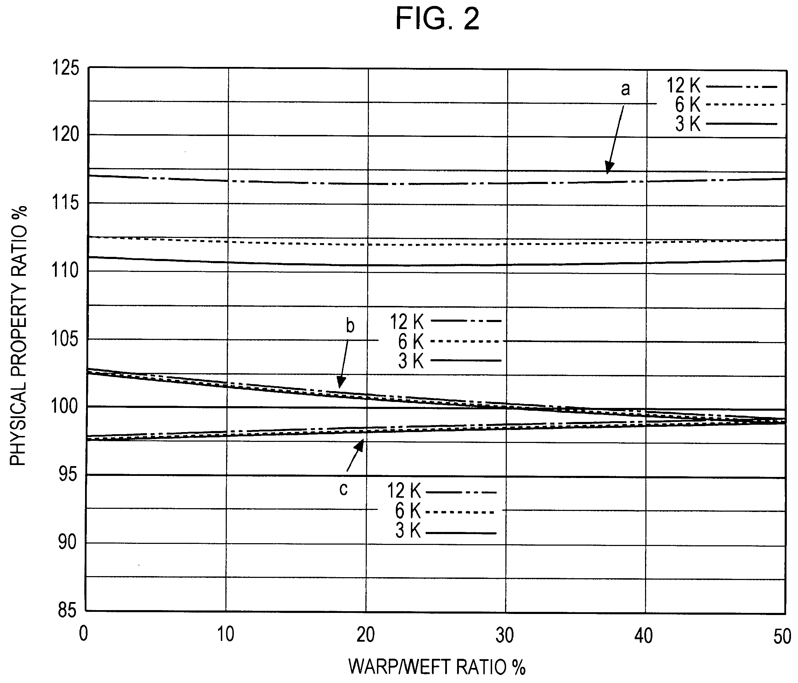

Figs. 2 to 4 are graphs showing the results of the main test carried out for the three total fluff lengths. In the main test, as in the preliminary test, three test specimens of samples having the same warp/weft ratio were made, and the interlaminar shear test and the flexural test were carried out on each of the three test specimens. Moreover, the average of the measurement data was calculated. The graphs of Figs. 2 to 4 show approximation curves based on the average. In the graphs of Figs. 2 to 4, approximation curves of the delamination strength ratio are represented by curves a, approximation curves of the warp-direction flexural strength ratio are represented by curves b, and approximation curves of the weft-direction flexural strength ratio are represented by curves c. Moreover, in each of the graphs of Figs. 2 to 4, the curves a, b, and c for representing the result of the 3K carbon-fiber preform, the result of the 6K carbon-fiber preform, and the result of the 12K carbon-fiber preform are respectively drawn by solid lines, dotted lines, and two-dot chain lines.

The graph of Fig. 2 shows the relationship between the warp/weft ratio and the physical property ratio of CFRPs produced from carbon-fiber preforms having a total fluff length of 60 cm/cm$^2$, which is the result of the main test.

It can be seen from the graph of Fig. 2 that, regarding the delamination strength ratio (curves a), for each of CFRPs formed by layering 3K, 6K, and 12K carbon-fiber preforms, when the warp/weft ratio is in the range of 0 to 50%, the delamination strength is improved by 10% or more as compared with a CFRP formed by layering only carbon-fiber preforms that do not have fluff on the layer surfaces, and the curves show substantially flat trends. In other words, it is confirmed that there is a trend such that, even when the warp/weft ratio changes, the delamination strength does not change considerably as long as the total fluff length is constant.

It can be seen from the graph of Fig. 2 that, regarding the weft-direction flexural strength ratio (curves c), which is one of the flexural strength ratios, for each of 3K, 6K, and 12K carbon-fiber preforms, there is a trend that the weft-direction strength ratio is gradually improved as the warp/weft ratio increases from 0% toward 50% (equal ratio). The reason for such a trend is considered as follows: as the warp/weft ratio increases, the number of cut filaments of the weft (carbon fiber yarn) on a perform surface decreases, and therefore the strength of the weft is improved.

In contrast, regarding the warp-direction flexural strength ratio (curves b), which is one of the flexural strength ratios, for each of the 3K, 6K, and 12K carbon-fiber preforms, the warp-direction flexural strength ratio is higher than 102% when the warp/weft ratio is 0% (the maximally unequal ratio). In the range of 0 < warp/weft ratio < 50%, that is, in the range of unequal ratio, the warp-direction flexural strength ratio is constantly higher than the weft-direction flexural strength ratio. As the warp/weft ratio increases from 0% toward 50% (equal ratio), the warp-direction flexural strength ratio decreases. When the warp/weft ratio is 50% (equal ratio), the warp-direction flexural strength ratio is substantially the same as the weft-direction flexural strength ratio, and is about 98 to 99%.

It can be seen from the graph of Fig. 2 that, in the case where the total fluff length is 60 cm/cm$^2$, for each of CFRPs produced from the 3K, 6K, and 12K carbon-fiber preforms, the range of warp/weft ratio in which the warp-direction flexural strength is improved as compared with a CFRP produced by using only carbon-fiber preforms that do not have fluff on the layer surfaces is the range of warp/weft ratio < 30%.

These results show that, regarding a CFRP that is formed by layering the carbon-fiber preforms 1 so that the direction of the warp is aligned with a direction in which strength is required for the CFRP, by making the warp/weft ratio of the carbon-fiber preforms 1 of the CFRP be less than 30% in the case where the total fluff length is 60 cm/cm$^2$, it is possible to obtain a CFRP having a delamination strength that is improved by 10% or more as compared with a CFRP formed by layering only carbon-fiber preforms that do not have fluff on the layer surfaces, while preventing reduction in the warp direction flexural strength. The reason why the warp-direction flexural strength ratio is higher than 100% at the warp/weft ratio of 0% for each of the 3K, 6K, and 12K carbon-fiber preforms is as follows, as described above in the preliminary test. It is considered that, when some of filaments of the weft are cut, the tension of the weft is released, crimp stresses generated in crimp portions of the warp are reduced, and therefore the strength of the warp is improved.

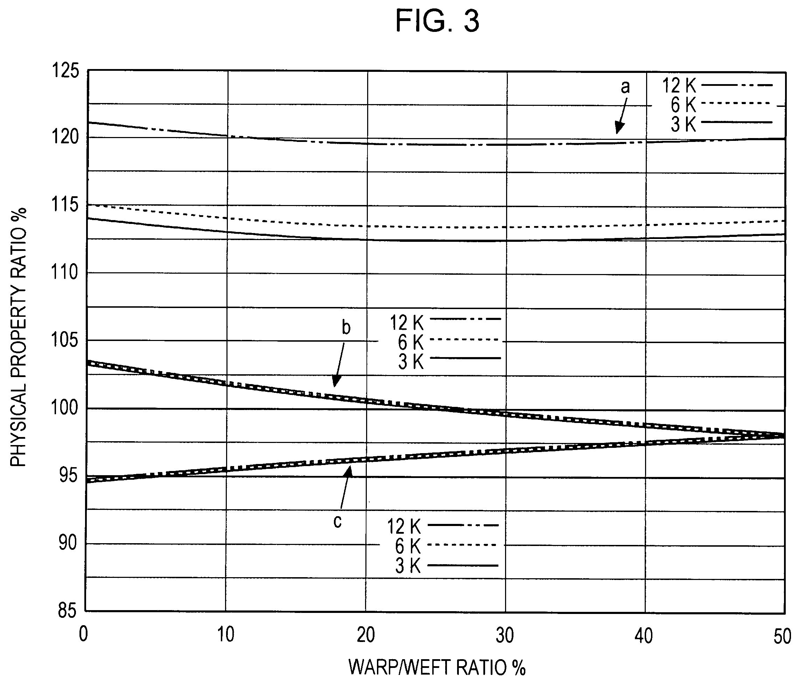

The graph of Fig. 3 shows the relationship between the warp/weft ratio and the physical property ratio of CFRPs produced from carbon-fiber preforms having a total fluff length of 90 cm/cm$^2$, which is the result of the main test.

It can be seen from the graph of Fig. 3 that, regarding the delamination strength ratio (curves a), for each of CFRPs formed by layering 3K, 6K, and 12K carbon-fiber preforms, when the warp/weft ratio is in the range of 0 to 50%, the delamination strength is improved by 12% or more as compared with a CFRP formed by layering only carbon-fiber preforms that do not have fluff on the layer surfaces, and the curves show a trend similar to that of the case where the total fluff length is 60 cm/cm$^2$.

It can be confirmed from the graph of Fig. 3 that, also regarding the flexural strength ratios, each of 3K, 6K, and 12K carbon-fiber preforms shows a trend similar to that of the case where the total fluff length is 60 cm/cm$^2$. In other words, regarding the weft-direction flexural strength ratio (curves c), which is one of the flexural strength ratios, for each of the 3K, 6K, and 12K carbon-fiber preforms, there is a trend that the weft-direction strength ratio is gradually improved as the warp/weft ratio increases from 0% toward 50% (equal ratio), and the weft-direction flexural strength ratios (curves c) at the warp/weft ratio of 50% (equal ratio) are about 98%.

On the other hand, regarding the warp-direction flexural strength ratio (curves b), which is one of the flexural strength ratios, for each of the 3K, 6K, and 12K carbon-fiber preforms, the warp-direction flexural strength ratio is higher than 103% when the warp/weft ratio is 0% (the maximally unequal ratio). In the range of 0 < warp/weft ratio < 50%, that is, in the range of unequal ratio, the warp-direction flexural strength ratio is constantly higher than the weft-direction flexural strength ratio. As the warp/weft ratio increases from 0% toward 50% (equal ratio), the warp-direction flexural strength ratio decreases. When the warp/weft ratio is 50% (equal ratio), the warp-direction flexural strength ratio is substantially the same as the weft-direction flexural strength ratio, and is about 98%.

It can be seen from the graph of Fig. 3 that, in the case where the total fluff length is 90 cm/cm$^2$, for each of CFRPs produced from the 3K, 6K, and 12K carbon-fiber preforms, the range of warp/weft ratio in which the warp-direction flexural strength is improved as compared with a CFRP produced by using only carbon-fiber preforms that do not have fluff on the layer surfaces is the range of warp/weft ratio < 25%.

These results show that, regarding a CFRP that is formed by layering the carbon-fiber preforms 1 so that the direction of the warp 2 is aligned with a direction in which strength is required for the CFRP, by making the warp/weft ratio of the carbon-fiber preforms 1 of the CFRP be less than 25% in a case where the total fluff length is 90 cm/cm$^2$, it is possible to improve the delamination strength by 12% or more as compared with a CFRP formed by layering only carbon-fiber preforms that do not have fluff on the layer surfaces, while preventing reduction in the warp direction flexural strength.

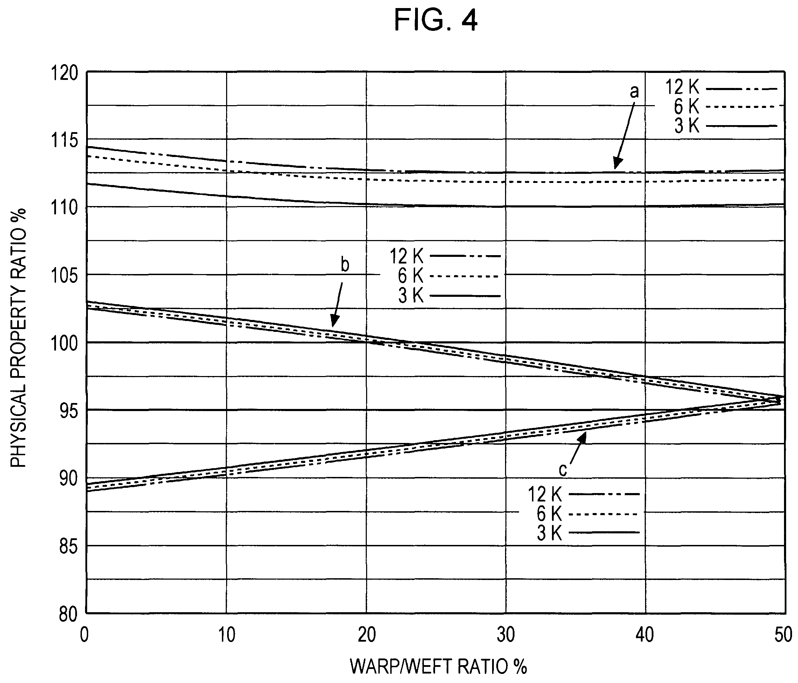

The graph of Fig. 4 shows the relationship between the warp/weft ratio and the physical property ratio of CFRPs produced from carbon-fiber preforms having a total fluff length of 180 cm/cm$^2$, which is the result of the main test.

It can be seen from the graph of Fig. 4 that, regarding the delamination strength ratio (curves a), for each of CFRPs formed by layering 3K, 6K, and 12K carbon-fiber preforms, in the range of 0 to 50%, the delamination strength is improved by 10% or more as compared with a CFRP formed by layering only carbon-fiber preforms that do not have fluff on the layer surfaces, and the curves show a trend similar to that of case where the total fluff length is 60 cm/cm$^2$ or 90 cm/cm$^2$.

It can be confirmed from the graph of Fig. 4 that, also regarding the flexural strength ratios, each of CFRPs formed by layering 3K, 6K, and 12K carbon-fiber preforms shows a trend similar to that of the case where the total fluff length is 60 cm/cm$^2$ or 90 cm/cm$^2$. Regarding the warp/weft ratio, that is, regarding the weft-direction flexural strength ratio (curves c), which is one of the flexural strength ratios, for each of the 3K, 6K, and 12K carbon-fiber preforms, there is a trend that the weft-direction strength ratio is gradually improved as the warp/weft ratio increases from 0% toward 50% (equal ratio), and the weft-direction flexural strength ratios (curves c) at the warp/weft ratio of 50% (equal ratio) are about 95 to 96%.

On the other hand, regarding the warp-direction flexural strength ratio (curves b), which is one of the flexural strength ratios, for each of the 3K, 6K, and 12K carbon-fiber preforms, the warp-direction flexural strength ratio is higher than 102% when the warp/weft ratio is 0% (the maximally unequal ratio). In the range of 0 < warp/weft ratio < 50%, that is, in the range of unequal ratio, the warp-direction flexural strength ratio is constantly higher than the weft-direction flexural strength ratio. As the warp/weft ratio increase from 0% toward 50% (equal ratio), the warp-direction flexural strength ratio decreases. When the warp/weft ratio is 50% (equal ratio), the warp-direction flexural strength ratio is substantially the same as the weft-direction flexural strength ratio, and is about 95 to 96%.

It can be seen from the graph of Fig. 4 that, in the case where the total fluff length is 180 cm/cm$^2$, for each of CFRPs produced from the 3K, 6K, and 12K carbon-fiber preforms, the range of warp/weft ratio in which the warp-direction flexural strength is improved as compared with a CFRP produced by using only carbon-fiber preforms that do not have fluff on the layer surfaces is the range of warp/weft ratio < 20%.

The three results of the main test show that, regarding a CFRP that is formed by layering the carbon-fiber preforms 1 so that the directions of the warps 2 were aligned with each other, when the total fluff length on the layer surface of each of the carbon-fiber preforms 1 is in the range of 180cm/cm$^2$ to 60cm/cm$^2$, for each of CFRPs formed by layering 3K, 6K, and 12K carbon-fiber preforms 1, the warp-direction flexural strength ratio is higher than the weft-direction flexural strength ratio when the warp/weft ratio is less than 50%, which is an unequal range, while the delamination strength is improved by 10% or more as compared with a CFRP formed by layering only carbon-fiber preforms that do not have fluff on the layer surfaces. In particular, when the warp/weft ratio is less than 20%, although fluff is formed on each of the carbon-fiber preforms 1 in order to improve the delamination strength, it is possible to improve the delamination strength by 10% or more without reducing the warp direction flexural strength as compared with a CFRP formed by layering only carbon-fiber preforms that do not have fluff on the layer surfaces.

Therefore, in the CFRP according to the present embodiment, each of the carbon-fiber preforms 1 of the CFRP has a warp/weft ratio of less than 20% for a total fluff length in the range of 180 cm/cm$^2$ to 60 cm/cm$^2$. Moreover, a final product is produced from the CFRP so that the directions of the warps 2 of the carbon-fiber preforms 1 are aligned with a direction in which strength is required for the final product. Thus, the lifetime of the product can be improved because the delamination strength of the CFRP is improved and the strength in the direction in which strength is required can be maintained or improved.

A carbon-fiber preform and a CFRP according to the present invention are not limited to those according to the embodiment described above, and may be configured as described below.

In the embodiment described above, the warp/weft ratio of the carbon-fiber preforms 1 of a CFRP is less than 20%, so that the flexural strength in the warp direction does not become lower than that of a CFRP formed by layering only carbon-fiber preforms that do not have fluff on the layer surfaces. However, this is not a limitation on a CFRP and carbon-fiber preforms 1 of the CFRP according to the present invention. It is sufficient that the total fluff length of fluff formed on the warp 2 and the total fluff length of fluff formed on the weft 3 are simply not equal in the carbon-fiber preform 1.

In other words, it is a precondition that fluff is formed on the carbon-fiber preform 1 of a CFRP in order to improve the delamination strength of the CFRP. In this case, as it is clear from the test results, if the total fluff length of the warp 2 and the total fluff length of the weft 3 of each of the carbon-fiber preforms 1 of the CFRP were equal (at an equal ratio, which corresponds to a warp/weft ratio of 50% in the embodiment), the strength in the direction of the warp 2 and the strength in the direction of the weft 3 would decrease by a the same amount. However, by making the total fluff length of fluff formed on the warp 2 and the total fluff length of fluff formed on the weft 3 be not equal as in the case where the warp/weft ratio is less than 50% in the embodiment, at least the strength in the direction of one of the warp and the weft (the warp) having a smaller total fluff length can be improved as compared with a case of the equal ratio. This is effective in a case where the strength in a specific direction is particularly required for a final product, and the present invention also includes consideration of such a case.

In the embodiment, the direction of the warp 2 of the carbon-fiber preform 1 of a CFRP, that is, the direction of one of the warp and the weft having a smaller total fluff length, is a direction in which strength is required for the CFRP when it is used in a final product. However, this is not a limitation, and the direction of one of the warp and the weft having a smaller total fluff length may form an angle in the range of ±45° with respect to the direction in which strength is required for the CFRP.

In other words, in the embodiment, in the case where the warp/weft ratio of each of the carbon-fiber preforms 1 of a CFRP is less than 50%, the CFRP may be formed by layering such carbon-fiber preforms 1 so that the direction of the warp 2 of each of the carbon-fiber preforms 1 has an angle with respect to a direction (hereinafter referred to as the "strength direction") in which strength is required for the CFRP. Even in such a case, as long as the angle is in the range of ±45°, considering the ratio of the total fluff of the warp 2 and the weft 3 in the strength direction and in a direction perpendicular to the strength direction, the ratio of fluff in the strength direction is smaller than, that is, not equal to that of the ratio in the direction perpendicular to the strength direction. Also in this case, as with the case where the direction of the warp 2 is aligned with the strength direction as in the embodiment, the strength of a CFRP in a state in which the CFRP is used for a final product (i.e., a state in which the direction of one of the warp and the weft (the warp 2) of the carbon-fiber preform 1 having a smaller total fluff length forms an angle with respect to the strength direction) can be improved as compared with a case where the fluff is formed at an equal ratio. Making the direction of one of the warp and the weft having a smaller total fluff length in a CFRP have an angle with respect to the direction in which strength is required for the CFRP when it is used in the final product is, in other words, layering the carbon-fiber preforms 1 of the CFRP are so that the direction of one of the warp and the weft having a smaller total fluff length has an angle with respect to the direction in which strength is required for the CFRP.

In the CFRP according to the embodiment, the carbon-fiber preforms 1 of the CFRP have fluff formed on the layer surfaces and the total fluff lengths on the layer surfaces are the same. However, this is not a limitation on the present invention. The total fluff lengths on the layer surfaces of the carbon-fiber preforms 1 may differ from each other. To be specific, regarding a CFRP, delamination of a carbon-fiber preform is likely to occur at the center of the CFRP in the thickness direction in which carbon-fiber preforms are layered (hereinafter referred to as the "layer direction"). Therefore, in order to particularly improve the delamination strength at the center, a CFRP may be configured as in the embodiments (1) to (4) described below.

(1) Fluff may be formed on the layer surfaces of only a carbon-fiber preform at the center (a carbon-fiber preform at the center in the layer direction if the number of layers is an odd number, and two carbon-fiber preforms on both sides of the center in the layer direction if the number of layers is an even number) or a plurality of carbon-fiber preforms disposed near the center, and fluff need not be formed on other carbon-fiber preforms. Also in this case, the lifetime of the product can be improved as compared with a case where the CFRP is produced by layering only carbon-fiber preforms that do not have fluff on the layer surfaces. Moreover, it is possible to suppress reduction of strength or improve strength in the strength direction (which is the direction of the warp 2 in the embodiment) while forming fluff on some of the carbon-fiber preforms. Moreover, in this case, as compared with the embodiment, reduction of strength in a direction perpendicular to the strength direction can be suppressed, because fluff is not formed on carbon-fiber preforms that are disposed at a position at which delamination is not likely to occur.

(2) A CFRP may be formed so that the total fluff length on the layer surfaces of the carbon-fiber preform 1 at the center is in the range of 100 to 150 cm/cm$^2$, which is advantageous for the delamination strength ratio, and so that the total fluff length on the layer surfaces of the carbon-fiber preforms 1 decreases with increasing distance from the center. Also in this case, an advantage the same as that of (1) is obtained. However, as compared with (1), although the delamination strength of the entirety of the CFRP is improved, the strength in the strength direction and the strength in a direction perpendicular to the strength direction is reduced slightly.

(3) Fluff is formed on the two layer surfaces of carbon-fiber preforms used as intermediate layers, which are not located at the outermost surfaces, of the CFRP as in the embodiment, and the total fluff lengths on the two layer surfaces may differ from each other. In this case, it is preferable that the total fluff length on one of the layer surfaces located nearer to the center in the layer direction be larger than the total fluff length on the other layer surface. Also in this case, an advantage the same as that of (2) is obtained.

(4) Regarding carbon-fiber preforms used as the intermediate layers, fluff may be formed on only one of the two layer surfaces. For example, in the case where fluff is formed on only carbon-fiber preforms located at the center in the layer direction as in (1), fluff may be formed on only one of the two layer surfaces of each of two carbon-fiber preforms located on both sides of the center or each of two carbon-fiber preforms located at the center, and the carbon-fiber preforms may be layered so that the layer surfaces of the two carbon-fiber preforms on which fluff is formed face each other. Also in this case, an advantage the same as that of (1) is obtained.

In the embodiment, it is assumed that the carbon-fiber preforms 1 having the same warp/weft ratio are layered, that is, the ratio (hereinafter referred to as the "fluff ratio") of the total fluff length of fluff in the strength direction to the total fluff length of the entire fluff on the layer surfaces of the carbon-fiber preforms 1 is the same for all of the carbon-fiber preforms 1 of a CFRP. However, this is not a limitation on a CFRP according to the present invention. The fluff ratios on the layer surfaces of the carbon-fiber preforms 1 of the CFRP may differ from each other.

For example, when a bending force is applied to a CFRP, carbon-fiber preforms located near ends in the layer direction tend to fracture. Therefore, the layer surfaces of the carbon-fiber preforms 1 located near the ends in the layer direction may have fluff ratios smaller than those of the layer surfaces of other carbon-fiber preforms 1. In this case, if the total fluff length on each of the layer surfaces is the same as that of the embodiment, an advantage the same as that of the embodiment can be obtained regarding the delamination strength, and the flexural strength in the strength direction can be improved as compared with the embodiment. In this case, the warp/weft ratios of the front and back layer surfaces 5 and 6 of the carbon-fiber preform 1 may differ from each other.

In the embodiment, it is assumed that the strength direction is the direction of the warp 2. In order to achieve a warp/weft ratio (fluff ratio) of less than 20% as the entirety of a CFRP, that is, as the total of the fluff 4 formed on the layer surfaces of the carbon-fiber preforms 1 of the CFRP, the fluff 4 is formed on the layer surfaces of the carbon-fiber preforms 1 of the CFRP so that the carbon-fiber preforms 1 have the same warp/weft ratio of less than 20%. However, this is not a limitation on the present invention. A CFRP may be formed, for example, as described below in (1) to (3) in order to achieve a fluff ratio of less than 20% as the entirety of the CFRP.

(1) In the case where the strength direction is the direction of the warp 2 as in the embodiment, the warp/weft ratio (fluff ratio) of the entirety of CFRP may be made to be less than 20% by using a combination of a plurality of carbon-fiber preforms 1 that have the same total fluff length on the layer surfaces and that have different warp/weft ratios. To be specific, for example, in a case where a CFRP is formed by layering ten carbon-fiber preforms 1 having the same total fluff length on the layer surfaces, a fluff ratio of the entirety of the CFRP of less than 20% may be obtained by using, for example, any of the following combinations: "warp/weft ratio 0% x 8 + warp/weft ratio 99% x 2", "warp/weft ratio 10% x 5 + warp/weft ratio 29% x 5", and "warp/weft ratio 0% x 2 + warp/weft ratio 10% x 2 + warp/weft ratio 20% x 2 + warp/weft ratio 30% x 2 + warp/weft ratio 39% x 2".

(2) If a plurality of carbon-fiber preforms 1 having different total fluff lengths on the layer surfaces are used in the case of (1), the following combinations may be used. For example, if the number of layers is 9, the combinations may be as follows: "total fluff length 60 cm/cm$^2$ and warp/weft ratio 0% x 8 + total fluff length 120 cm/cm$^2$ and warp/weft ratio 99% x 1", "total fluff length 90 cm/cm$^2$ and warp/weft ratio 10% x 5 + total fluff length 90 cm/cm$^2$ and warp/weft ratio 30% x 3 + total fluff length 180 cm/cm$^2$ and warp/weft ratio 29% x 1", and "total fluff length 60 cm/cm$^2$ and warp/weft ratio 0% x 2 + total fluff length 180 cm/cm$^2$ and warp/weft ratio 10% x 1 + total fluff length 60 cm/cm$^2$ and warp/weft ratio 20% x 3 + total fluff length 90 cm/cm$^2$ and warp/weft ratio 30% x 2 + total fluff length 120 cm/cm$^2$

and warp/weft ratio 39% x 1". Also with such combinations, the fluff ratio of the entirety of the CFRP can be made less than 20%.

(3) In the cases of (1) and (2), the carbon-fiber preforms 1 are layered so that the direction of the warp 2, that is, one of the warp and the weft having a smaller total fluff length, is aligned with the strength direction. The idea of combinations in (1) and (2) can be used also when the direction of one of the warp and the weft having a smaller total fluff length forms an angle with respect to the strength direction. In other words, the fluff ratio of the entirety of CFRP of less than 20% can be achieved as follows: the fluff ratio of each of the carbon-fiber preforms 1 is obtained by calculating, for each of the warp 2 and the weft 3, the ratio of total fluff length in the strength direction to the total fluff length on the basis of the angle between the strength direction and the direction of the warp and the weft having a smaller total fluff length; and the warp/weft ratio in (1) and (2) is substituted with the fluff ratio. In this case, even if the carbon-fiber preforms 1 have the same warp/weft ratio, they are treated as carbon-fiber preforms 1 having different fluff ratios because the angles are different.

As long as the flexural strength in the strength direction is in a desired range, a plurality of carbon-fiber preforms 1 of a CFRP may include carbon-fiber preforms 1 in which one of the warp and the weft having a smaller total fluff length is oriented in any direction.

For example, the number of layers of the carbon-fiber preforms 1 is set on the basis of the thickness of the CFRP in consideration of the final product. If a desired strength in the strength direction can be obtained by using a number of layers of the carbon-fiber preforms 1 smaller than the required number of layers, each of other carbon-fiber preforms 1 may, for example, have a fluff ratio higher than 50% (may have a warp/weft ratio near 50% and the direction of the warp 2 may form an angle larger than 45° with respect to the strength direction).

In the embodiment, the carbon-fiber preform 1 is a fabric in which the warp 2 and the weft 3 intersect (perpendicularly) at an angle of 90°. However, this is not a limitation. For example, the carbon-fiber preform 1 may be a slant weave fabric, in which the warp 2 and the weft 3 do not intersect perpendicularly. In this case, as described above, when the direction of one of the warp and the weft is considered as a reference, fluff formed on the other of the warp and the weft are assumed to be divided into a component in the direction of the one of the warp and the weft and a component in a direction perpendicular to the direction.

For example, in the case where a carbon-fiber preform 1 having a warp/weft ratio of 20% is obtained by forming the fluff 4 by cutting filaments of only the weft 3 of the carbon-fiber preform 1, if the weft 3 is inclined with respect to a direction perpendicular to the warp 2 by about 33.7°, a component of the weft 3 in the direction of the warp 2 is about 40%, which corresponds to a warp/weft ratio of about 20% of the entirety of the preform including the warp 2. Therefore, in this case, in the carbon-fiber preform 1, the weft 3 may be inclined about 33.7° or less, at which the component of the weft 3 in the direction of the warp 2 becomes less than 20%.

In each embodiment described above, the carbon-fiber preform 1 is a plain weave fabric. This is not a limitation on the carbon-fiber preform 1 according to the present invention. The carbon-fiber preform 1 may be a twill fabric or a satin fabric.

In the case where the carbon-fiber preform 1 is a twill fabric or a satin fabric, the patterns of the warp 2 and the weft 3 on the front and back surfaces of the carbon-fiber preform 1 differ from each other. Therefore, in this case, the warp/weft ratio may be set in accordance of the patterns of the warp 2 and the weft 3 on the layer surfaces of the carbon-fiber preform 1.

In accordance with the difference in the patterns of the warp and the weft on the front and back surfaces of the carbon-fiber preform 1 in the satin fabric and in the twill fabric, the lengths of fluff formed the warp and the weft differ from each other because the distances between intersections of the warp and the weft differ from each other, and therefore the total fluff lengths are influenced by the difference.

In the embodiment, the carbon-fiber preform 1 is a fabric made by weaving carbon fiber yarns having the same number of filaments (3K, 6K, 12K, or the like). However, this is not a limitation on the present invention. For example, the carbon-fiber preform 1 may be a fabric made by using carbon fiber yarns having different number of filaments as the warp 2 and the weft 3. In this case, the warp/weft ratio may be set in accordance with the number of filaments of carbon fiber yarns of the warp 2 and the weft 3.

In the embodiment, in each of the carbon-fiber preforms 1 of the CFRP, fluff is formed by cutting some of filaments of the carbon-fiber multifilament yarn of mainly the weft 3, which is one of the warp 2 and the weft 3. However, this is not a limitation on the present invention. With consideration of both the direction in which strength is required for the CFRP and the directions of the yarns, the relationship between the warp 2 and the weft 3 (such as the state of fluff) may be the exact opposite in the examples described above. In other words, in the embodiment, fluff may be formed by cutting some of filaments of mainly the warp 2, and the ratio of the total fluff length of fluff formed on the weft 3 to the sum of the total fluff lengths of fluff formed on the warp 2 and the weft 3 may be less than 50% (which corresponds to a warp/weft ratio higher than 50% in the embodiment) and preferably less than 20% (which corresponds to a warp/weft ratio of higher than 80% in the embodiment).

In the embodiment, a CFRP is produced by layering the carbon-fiber preforms 1 by using a hand layup method. However, this is not a limitation. A CFRP may be made by producing a prepreg by affixing matrix resin sheets to layer surfaces of the carbon-fiber preforms 1 beforehand, layering a desired number of such prepregs, and by performing autoclave molding. Alternatively, a CFRP may be produced by placing a plurality of carbon-fiber preforms 1, which have been layered beforehand, in a mold, and by injecting and impregnating the carbon-fiber preforms 1 with a matrix resin by using an RTM molding method.

When forming the fluff 4 on the carbon-fiber preform 1, it is not necessary to cut filaments of a carbon fiber yarn at a uniform pitch. The fluff 4 may be formed by cutting some of filaments of a carbon fiber yarn (the warp 2 or the weft 3) at a nonuniform pitch so as to obtain a desired total fluff length and a desired warp/weft ratio on the layer surface.

In the embodiments described above, each of the warp 2 and the weft 3 of the carbon-fiber preform 1 includes only carbon fiber yarns. However, this is not a limitation. As long as the total fluff length and the warp/weft ratio obtained by cutting some of filaments of the carbon fiber yarn are in allowable ranges, the carbon-fiber preform 1 may be a hybrid type in which the warp 2 or the weft 3 includes yarns other than carbon fiber yarns (such as glass fiber yarns, aramid fiber yarns, polyethylene fiber yarns, and the like).

In the embodiment, the matrix resin of the CFRP is a vinyl ester resin, which is a thermosetting resin. However, this is not a limitation. The matrix resin may be another thermosetting resin, such as an epoxy resin or an unsaturated polyester resin, or a thermoplastic resin, such as a polyester resin.

Reference Signs List

1 carbon-fiber preform
2 warp
3 weft
4 fluff
5 surface (layer surface)
6 surface (layer surface)
a delamination strength ratio
b warp-direction flexural strength ratio
c weft-direction flexural strength ratio
d warp direction
e weft direction

**Claims**

1. A carbon-fiber preform (1) for a carbon-fiber-reinforced plastic having a layered structure in which a plurality of carbon-fiber preforms (1) are layered, the carbon-fiber preform (1) being formed from mutually intersecting warp (2) and weft (3) each of which including a carbon-fiber multifilament yarn, **characterized in that**
at least one of layer surfaces (5, 6) of the carbon-fiber preform (1) has fluff (4) formed by cutting some of filaments of the carbon-fiber multifilament yarn of the warp (2) and/or the weft (3), each of the layer surfaces (5, 6) being a surface that faces another carbon-fiber preform (1) when the plurality of carbon-fiber preforms (1) are layered, and, in the at least one of the layer surfaces (5, 6) having the fluff (4), the fluff (4) is formed in such a way that_a total fluff length of the warp (2) and a total fluff length of the weft (3) are not equal, the total fluff length being a total length of fluff (4) present per unit area, which is obtained by multiplying the fluff density by the average fluff length.

2. The carbon-fiber preform according to claim 1, wherein a total fluff length with respect to a direction of one of the warp (2) and the weft (3) is less than 20% of a sum of the total fluff lengths of the warp (2) and the weft (3).

3. A carbon-fiber-reinforced plastic having a layered structure in which a plurality of carbon-fiber preforms (1) are layered, each of the carbon-fiber preforms (1) being formed from mutually intersecting warp (2) and weft (3) each of which including a carbon-fiber multifilament yarn,
**characterized in that**
at least one of layer surfaces (5, 6) of at least one of the carbon-fiber preforms (1) has fluff (4) formed by cutting some of filaments of the carbon-fiber multifilament yarn, each of the layer surfaces (5, 6) being a surface that faces another carbon-fiber preform (1) when the plurality of carbon-fiber preforms (1) are layered, the fluff (4) being formed in such a way that a total fluff length of the warp (2) and a total fluff length of the weft (3) are not equal, the total fluff length being a total length of fluff (4) present per unit area, which is obtained by multiplying the fluff density by the average fluff length, and, in the at least one of the carbon-fiber preforms (1) having the at least one of layer surfaces (5, 6) having the fluff (4), in a state in which the carbon-fiber preforms (1) are layered, one of the warp (2) and the weft (3) having a smaller total fluff length forms an angle of 45° or less with respect to a direction in which strength is required for the carbon-fiber-reinforced plastic.

4. The carbon-fiber-reinforced plastic according to claim 3, wherein a sum of total fluff length of the carbon-fiber preform (1) on which the fluff (4) is formed with respect to the direction in which strength is required for the carbon-fiber-reinforced plastic is less than 20% of a sum of the total fluff lengths of the warp (2) and the weft (3).

5. The carbon-fiber-reinforced plastic according to claim 3, wherein the total fluff length of one of the warp (2) and the weft (3) of the carbon-fiber preform (1) on which the fluff (4) is formed is less than 20% of a sum of the total fluff lengths of the warp (2) and the weft (3), and
wherein the carbon-fiber preform (1) is layered so that the one of the warp (2) and the weft (3) is oriented in the direction in which strength is required for the carbon-fiber-reinforced plastic.

## Patentansprüche

1. Eine Kohlefaservorform (1) für einen kohlefaserverstärkten Kunststoff, der eine Schichtstruktur aufweist, in der eine Vielzahl von Kohlefaservorformen (1) geschichtet sind, die Kohlefaservorform (1) ist geformt aus sich wechselseitig überkreuzenden Kettfäden (2) und Schussfäden (3) von denen jeder eine Kohlefasermultifilamentgarn beinhaltet, **dadurch gekennzeichnet, dass**
wenigstens eine der Schichtoberflächen (5, 6) der Kohlefaservorform (1) Fransen (4) hat, die durch Schneiden einiger der Filamente des Kohlefasermultifilamentgarns der Kettfäden und/oder der Schussfäden gebildet sind, wobei jede der Schichtoberflächen (5, 6) eine Oberfläche ist, die zu einer anderen Kohlefaservorform (1) weist, wenn die Vielzahl an Kohlefaservorformen (1) geschichtet sind, und,
dass bei zumindest einer der Schichtoberflächen (5, 6), welche Fransen (4) hat, die Fransen (4) in der Weise geformt sind, dass eine Gesamtlänge der Fransen der Kettfäden (2) und eine Gesamtlänge der Fransen der Schussfäden (3) nicht gleich sind, wobei die Gesamtlänge der Fransen die Gesamtlänge von Fransen (4) ist, die auf einer Flächeneinheit vorhanden sind, die durch Multiplikation der Fransendichte mit der durchschnittlichen Fransenlänge erreicht wird.

2. Die Kohlefaservorformen nach Anspruch 1, wonach die Gesamtlänge der Fransen bezüglich der Richtung eines der Kettfäden (2) und der Schussfäden (3) weniger als 20 % der Summe der Gesamtlänge der Fransen der Kettfäden (2) und der Schussfäden (3) beträgt.

3. Ein kohlefaserverstärkter Kunststoff, der eine Schichtstruktur hat, in welcher eine Vielzahl von Kohlefaservorformen (1) geschichtet sind, wobei jede der Kohlefaservorformen (1) durch sich wechselseitig überkreuzenden Kettfäden (2) und Schussfäden (3) geformt ist, von denen jeder ein Kohlefasermultifilamentgarn beinhaltet, **dadurch gekennzeichnet, dass**
wenigstens eine der Schichtoberflächen (5, 6) der wenigstens einen Kohlefaservorform (1) Fransen (4) hat, die durch Schneiden einiger der Filamente des Kohlefasermultifilamentgarns gebildet sind, wobei jede der Schichtoberflächen (5, 6) eine Oberfläche ist, die zu einer anderen Kohlefaservorform (1) weist, wenn die Vielzahl an Kohlefaservorformen (1) geschichtet sind, die Fransen (4) sind in der Weise geformt, dass eine Gesamtlänge der Fransen der Kettfäden (2) und eine Gesamtlänge der Fransen der Schussfäden (3) nicht gleich sind, wobei die Gesamtlänge der Fransen die Gesamtlänge von Fransen (4) ist, die auf einer Flächeneinheit vorhanden sind, die durch Multiplikation der Fransendichte mit der durchschnittlichen Fransenlänge erreicht wird, und,
dass die wenigstens eine Kohlefaservorform (1) welche wenigstens die eine der Schichtoberflächen (5, 6) aufweist, die die Fransen (4) hat, in einem Zustand, in welchem die Kohlefaservorformen (1) geschichtet sind, eine der Kettfäden (2) und der Schussfäden (3) mit einer geringeren Gesamtlänge der Fransen einen Winkel von 45° oder weniger bilden bezüglich einer Richtung in welcher Festigkeit für den kohlefaserverstärkten Kunststoff gefordert ist.

4. Der kohlefaserverstärkte Kunststoff nach Anspruch 3, wonach eine Summe der Gesamtlänge der Fransen der Kohlefaservorform (1) an der die Fransen (4) in Bezug auf die Richtung in die Festigkeit des kohlefaserverstärkten Kunststoffes gefordert ist, weniger als 20% einer Summe der Gesamtlänge der Fransen der Kettfäden (2) und der Schussfäden (3) ist.

**5.** Der kohlefaserverstärkte Kunststoff nach Anspruch 3, wobei die Gesamtlänge der Fransen eines der Kettfäden (2) und der Schussfäden (3) der Kohlefaservorform (1) an denen die Fransen (4) geformt sind, weniger als 20% einer Summe der Gesamtlänge der Fransen der Kettfäden (2) und der Schussfäden (3) ist, und wobei die Kohlefaservorform (1) so geschichtet ist, dass der eine der Kettfäden (2) und der Schussfäden (3) in die Richtung ausgerichtet ist, in welcher Festigkeit für den kohlefaserverstärkten Kunststoff gefordert ist.

**Revendications**

**1.** Préforme (1) de fibre de carbone pour une matière plastique renforcée par de la fibre de carbone et ayant une structure stratifiée, dans laquelle une pluralité de préformes (1) de fibre de carbone sont stratifiées, la préforme (1) de fibre de carbone étant formée de chaîne (2) et de trame (3) s'intersectant mutuellement, dont chacune comprend un fil multifilamentaire de fibre de carbone,
**caractérisée en ce que**
au moins l'une des surfaces (5, 6) de couche de la préforme (1) de fibre de carbone a du duvet (4) formé en coupant certains des filaments du fil multifilamentaire de fibre de carbone de la chaîne (2) et/ou de la trame (3), chacune des surfaces (5, 6) de couche étant une surface qui fait face à une autre préforme (1) de fibre de carbone, lorsque la pluralité de préformes (1) de fibre de carbone sont stratifiées, et,
dans la au moins une des surfaces (5, 6) de couche ayant le duvet (4), le duvet (4) est formé de manière à ce qu'une longueur totale de duvet de la chaîne (2) et une longueur totale de duvet de la trame (3) ne soient pas égales, la longueur totale de duvet étant une longueur totale de duvet (4) présente par unité de surface, qui est obtenue en multipliant la densité de duvet par la longueur moyenne de duvet.

**2.** Préforme de fibre de carbone suivant la revendication 1, dans laquelle une longueur totale de duvet par rapport à une direction de l'une de la chaîne (2) et de la trame (3) est plus petite que 20 % d'une somme des longueurs totales de duvet de la chaîne (2) et de la trame (3).

**3.** Matière plastique renforcée par de la fibre de carbone et ayant une structure stratifiée, dans laquelle une pluralité de préformes (1) de fibre de carbone sont stratifiées, la préforme (1) de fibre de carbone étant formée de chaîne (2) et de trame (3) s'intersectant mutuellement, dont chacune comprend un fil multifilamentaire de fibre de carbone,
**caractérisée en ce que**
au moins l'une des surfaces (5, 6) de couche d'au moins l'une des préformes (1) de fibre de carbone a du duvet (4) formé en coupant certains des filaments du fil multifilamentaire de fibre de carbone, chacune des surfaces (5, 6) de couche étant une surface qui fait face à une autre préforme (1) de fibre de carbone lorsque la pluralité de préformes de fibre de carbone sont stratifiées, le duvet (4) étant formé de manière à ce qu'une longueur totale de duvet de la chaîne (2) et une longueur totale de duvet de la trame (3) ne soient pas égales, la longueur totale de duvet étant une longueur totale de duvet (4) présent par unité de surface, qui est obtenue en multipliant la densité de duvet par la longueur moyenne de duvet et, dans la au moins une des préformes (1) de fibre de carbone ayant la au moins une des surfaces (5, 6) de couche ayant le duvet (4), dans un état dans lequel les préformes (1) de fibre de carbone sont stratifiées, l'une de la chaîne (2) et de la trame (3) ayant une longueur totale de duvet plus petite fait un angle inférieur ou égal à 45° avec une direction dans laquelle on exige une résistance de la matière plastique renforcée par de la fibre de carbone.

**4.** Matière plastique renforcée suivant la revendication 3, dans laquelle une somme de la longueur totale de duvet de la préforme (1) de fibre de carbone, sur laquelle le duvet (4) est formé, par rapport à la direction dans laquelle de la résistance est exigée pour la matière plastique renforcée par de la fibre de carbone, est plus petite que 20 % d'une somme des longueurs totales de duvet de la chaîne (2) et de la trame (3).

**5.** Matière plastique renforcée suivant la revendication 3, dans laquelle la longueur totale de duvet de l'une de la chaîne (2) et de la trame (3) de la préforme (1) de fibre de carbone, sur laquelle le duvet (4) est formé, est plus petite que 20 % d'une somme des longueurs totales de duvet de la chaîne (2) et de la trame (3), et
dans laquelle la préforme (1) de fibre de carbone est stratifiée de manière à ce que l'une de la chaîne (2) et de la trame (3) soit orientée dans une direction dans laquelle de la résistance est exigée pour la matière plastique renforcée par de la fibre de carbone.

# FIG. 1

EP 2 784 197 B1

# FIG. 2

EP 2 784 197 B1

# FIG. 3

# FIG. 4

# FIG. 5

# FIG. 6

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7243147 A

- US 20050042412 A